# EUROPEAN PATENT APPLICATION

(11) **EP 1 803 870 A1**
(43) Date of publication of application: **04.07.2007**
(21) Application number: 05113087.0
(22) Date of filing: 30.12.2005
(51) Int. Cl.: E04F 19/02, B32B 7/02, B29C 47/06, B29C 47/20

(54) **Bendable impact resistant bumper**

(71) Applicant: Boston Metal Products Corporation, Medford MA 02155 (US)
(72) Inventor: Wallace, James, Lynnfield, MA 01940 (US)
(74) Representative: Modiano, Micaela Nadia

(57) **Abstract**

An elongated strip (8a) of polymer material having a closed top end (8b) and an open bottom end (8c) along a cross-section of the strip (8a), the direction between the top and bottom ends defining a radial direction or axis R of the strip, the strip comprising:
a first inner core layer (20a) comprised of a first polymer material having a configuration along the cross-section of the strip that is selected to render the strip manually resiliently bendable in the cross-sectional direction (i.e. orthogonal to the axial R direction between the two opposing terminal edges (12,14)), the inner core layer (20a) having opposing terminal edges (12) at the open end (8c) of the strip;
a second outer layer (10) comprised of a second polymer material bonded to an outer surface of the first inner core layer (20a), the second outer layer having opposing terminal edges (14) at the open end (8c) overlying the first inner core layer (20a);
wherein the inner core layer (20a) has an attachment mechanism (252) readily attachable through the open end (8c) of the strip to a complementary attachment mechanism (302) of a mounting device (300) that is attached to a mounting surface (350), the attachment mechanisms cooperating to exert a force or pressure (F) in the radial direction (12) of the strip when the strip is attached to the mounting device (300) that maintains the terminal edges (12,14) of at least one of the inner and outer layers (10,20a) in compressed (F) engagement with the mounting surface (350).

## Description

### FIELD OF THE INVENTION

The present invention relates to bendable and curvably mountable impact resistant bumper products comprised of one or more layers of manually bendable polymeric materials and methods for mounting such products. More particularly the invention relates to extruded or molded products comprising layers of polymers that are bonded to each other, each layer comprising a polymeric material having a different selected durometer, hardness, bendability, impact resistance and/or melting point and/or concentration of dye and/or plasticizer materials. Even more particularly, the invention relates to mechanisms for readily and securely attaching an elongated strip of a mufti-layer extruded product to a base such that the terminal edges of the elongated strip seat firmly on a mounting surface.

### BACKGROUND OF THE INVENTION

Extruded or injection molded products comprising two or more layers of polymer material are typically produced using complex molding or extrusion equipment and/or requiring complex processing steps that are difficult to reproduce from one cycle to the next. Production of a strip for use as a bumper to be mounted on a surface that is subject to impact requires a high degree of care in configuring the shape of the polymeric layers so that the end product can be properly mounted on a base that is attached to a mounting surface on which the strip is intended to be mounted for impact protection of the surface.

### SUMMARY OF THE INVENTION

The present invention relates to impact resistant and shock absorbing bumper products that can be attached to an exposed surface in a heavily trafficked room or other environment where the likelihood of a collision with a rolling cart or table or other objects is relatively high. The impact resistant bumpers of the invention are mulitilayered polymeric strips that are readily mountable on a surface to be protected The bumpers are attachable to a base in such a manner that opposing terminal edges on the periphery of an open mouthed end of the strip are bendably engageable with the surface on which the strip is mounted. The strip is also bendable along the longitudinal axis of its length so that the bumper can be attached to a base that runs along a curved or curvilinear, non-linear surface A mechanism for attaching the bumper to a complementary base is formed as an integral part of the polymeric based bumper mechanism. The attachment mechanism formed integrally into the structure of the bumper is resiliently bendable together with the bumper as a whole and is configured in such a manner that when the otherwise linear bumper is bent or deformed along its longitudinal length, the attachment mechanism retains its structural and functional integrity so as to be able to readily attach to the base even in a bent, curved or deformed condition. The invention also relates to structural products that comprise a body of two or more polymer materials adhered or bonded to each other each polymer material having a different durometer, hardness, bendability, molecular weight or melting point or concentration of dye materials and/or plasticizers. The structural products of the invention are preferably formed as a multi-layered strip of polymer materials which is/are resistant to impact by solid objects and/or shock absorbent and resistant to shrinkage along the longitudinal direction/length X of the strip-form product.

In accordance with the invention there is provided an elongated strip of polymer material having a closed top end and an open bottom end along a cross-section of the strip, the direction between the top and bottom ends defining a radial direction or axis R of the strip, the strip comprising:
a first inner core layer comprised of a first polymer material having a configuration along the cross-section of the strip that is selected to render the strip manually resiliently bendable in the cross-sectional direction (i.e. orthogonal to the axial R direction between the two opposing terminal edges 12, 14), the inner core layer having opposing terminal edges at the open end of the strip;
a second outer layer comprised of a second polymer material bonded to an outer surface of the first inner core layer, the second outer layer having opposing terminal edges at the open end overlying the first inner core layer;
wherein the inner core layer has an attachment mechanism readily attachable through the open end of the strip to a complementary attachment mechanism of a mounting device that is attached to a mounting surface, the attachment mechanism of the inner core layer exerting a force or pressure in the radial direction of the strip when attached to the mounting device that maintains the terminal edges of at least one of the inner and outer layers in compressed engagement with the mounting surface.

Most preferably, the terminal edges of the second outer layer of the strip extend in the radial direction of the strip a selected distance beyond the terminal edges of the first inner core layer such that the terminal edges of the second outer layer preferentially engage the mounting surface under the radial force or pressure exerted by the attachment mechanism and resiliently bend under said pressure.

The durometer of the second polymer material is typically selected to enable the terminal edges of the second outer layer to resiliently bend on engagement with the mounting surface when the strip and the terminal edges of the outer layer are mounted under pressure on the mounting surface.

Further in accordance with the invention there is provided a method of mounting an elongated strip of resiliently bendable polymer material on a mounting surface comprising:
forming a strip of polymer material comprising a first inner core layer and a second outer core layer out of first and second manually bendable polymer materials respectively by co-extruding said materials simultaneously through a die and bonding said strips to each other;
during the extrusion process, forming the inner core layer into a configuration having a closed top end and an open bottom end, the direction between the top and bottom ends defining a radial direction or axis of the strip;
wherein the first inner core layer and the second outer layer have terminal edges at the open bottom end;
forming the inner core layer during the extrusion process with an attachment mechanism that is readily attachable through the open end of the strip to a complementary attachment mechanism of a mounting device that is attached to a mounting surface,
wherein the attachment mechanism of the inner core layer is formed so as to exert a force or pressure in the radial direction of the strip when attached to the mounting device that maintains the terminal edges of at least one of the inner and outer layers in compressed engagement with the mounting surface.

The terminal edges of the second outer layer of the strip are most preferably formed during the extrusion to extend in the radial direction of the strip a selected distance beyond the terminal edges of the first inner core layer such that the terminal edges of the second outer layer preferentially engage the mounting surface under the radial force or pressure exerted by the attachment mechanism and resiliently bend under said pressure.

In another aspect of the invention there is provided an elongated strip of polymer material having a cross-section and longitudinal axis comprising:
a first inner core layer of a first polymer material having a selected configuration along the cross-section of the strip;
a second outer layer of a second polymer material bonded to an outer surface of the first inner core layer having a second selected configuration along the cross-section,
wherein the first and second polymer materials have a softness or durometer selected to enable the elongated strip to be manually bendable along the longitudinal axis of the strip;
wherein the inner core layer has a pair of fingers bendable under stress which are configured to compressibly engage against and hold the strip onto a complementary base surface when the strip is in a bent orientation ranging between linear (i.e. curvature of infinity) and a curved configuration where the curvature of the strip at any tangent point along the length of the axis of the strip has a circumferential diameter of greater than about two feet.

The elongated strip preferably further comprises a third layer of a polymeric material bonded to an inner surface of the first layer wherein the third layer of polymeric material has a durometer of between about 92 and about 98, and most preferably about 95 Shore A.

The fingers of the strip are formed as integral extensions of the core layer, the fingers having an unstressed position and being configured to bendably engage against the surface of the base in a stressed position, the first polymer material being selected to have a stiffness and bendability such that the fingers are resiliently movable between the stressed and unstressed positions. The fingers deform outwardly from the axis upon bending of the strip along the axis, the fingers being deformable under the bending of the strip to engage the complementary surface of the base member.

In another aspect of the invention there is provided an elongated strip of polymer material having a cross-section and longitudinal axis comprising:
a first inner core layer of a first polymer material having a selected configuration along the cross-section of the strip;
a second outer layer of a second polymer material bonded to an outer surface of the first inner core layer having a second selected configuration along the cross-section;
a third layer of a third polymeric material bonded to an inner surface of the first layer;
wherein the first and second and third polymer materials have a softness or durometer selected to enable the elongated strip to be manually bendable along the longitudinal axis of the strip;
wherein the inner core layer has a pair of fingers bendable under stress and configured to compressibly engage against and hold the strip onto a complementary base surface when the strip is bent along its axis such that the axis is substantially curved

In accordance with the invention there is provided an elongated strip of polymer material having a cross-section comprising:
a first inner core layer of a first polymer material having a selected configuration along the cross-section of the strip;
a second outer layer of a second polymer material bonded to an outer surface of the first inner core layer having a second selected configuration along the cross-section;
wherein the first polymer material has a softness, hardness or durometer selected to be manually bendable and compressible; and,
wherein the second polymer material has a durometer or hardness greater than the durometer or hardness of the first polymer material.

The first and second layers are preferably co-extruded simultaneously through a die and bonded during their simultaneous co-extrusion. The second polymer material comprises a meltable polymer material that is melted for the first time after its intial manufacture during the co-extrusion. The first polymer material comprises a meltable polymer material that has been melted at least one once prior to the co-extrusion. The second polymer material typically contains at least one selected dye. The first polymer material typically contains at least two selected dyes.

The elongated strip may further comprise a third layer of a polymeric material bonded to an inner surface of the first layer. In such an embodiment, the first, second and third layers are co-extruded simultaneously through a die and bonded during their simultaneous co-extrusion. The third layer typically comprises a polymeric material that is first melted during the co-extrusion.

There is also provided in accordance with the invention an elongated strip of polymer material having a cross-section and longitudinal axis comprising:
a first inner core layer of a first polymer material and a second underlayer of a second polymer material
wherein the first and second polymer materials have a softness or durometer selected to enable the elongated strip to be manually bendable along the longitudinal axis of the strip;
wherein the first layer has a pair of fingers integrally extending from the layer, the fingers being bendable under stress and configured to compressibly engage against and hold the strip onto a complementary surface of a base when the strip is in a bent orientation ranging between linear (i.e. curvature of infinity) and a curved configuration where the curvature of the strip at any tangent point along the length of the axis of the strip has a circumferential diameter of greater than about two feet.

There is also provided, in accordance with the invention, an apparatus comprising an elongated strip of polymer material and a base mounting member, the elongated strip having a cross-section and longitudinal axis and comprising:
a first inner core layer of a first polymer material and a second underlayer of a second polymer material;
wherein the first and second polymer materials have a softness or durometer predetermined to enable the elongated strip to be manually bendable along the longitudinal axis of the strip;
the base mounting member being bendable and having rigid upright extensions having a mating surface;
wherein the first layer of the elongated strip has a pair of fingers integrally extending from the layer, the fingers being bendable under stress and configured to compressibly engage against and hold the strip onto the mating surfaces of the upright extensions of the base mounting member when the strip is in a bent orientation ranging between linear (i.e. curvature of infinity) and a curved configuration where the curvature of the strip at any tangent point along the length of the axis of the strip has a circumferential diameter of greater than about two feet.

Further in accordance with the invention there is provided, an elongated strip of polymer material extruded in an extrusion cycle having a cross-section comprising:
a first inner core layer of a first polymer material having a selected configuration along the cross-section of the strip;
a second outer layer of a second polymer material bonded to an outer surface of the first inner core layer having a second selected configuration along the cross-section;
wherein the second polymer material is first melted during the extrusion cycle; and
wherein the first polymer material has been melted at least once prior to the extrusion cycle.

In another aspect of the invention there is provided, a method of producing a structural body of two or more layers of polymeric material, the method comprising:
selecting a first polymer material that has been melted and cooled to solid form;
selecting a second polymer material that has not been melted,
extruding the first and second polymer materials simultaneously in molten form through a selected mold or die in first and second strips;
layering the simultaneously extruded first and second strips into contact with each other in their molten form upon exiting the selected mold or die in a configuration wherein the first strip as formed has an outer surface and the second strip is deposited on the outer surface of the first strip.

The step of selecting the first polymer material includes selecting a polymer material that contains a dye material and has been melted prior to the step of extruding and most preferably comprises selecting a mixture of two or more polymer materials that have been melted and cooled to solid form.

The step of extruding typically comprises forming the first polymeric material upon exiting the mold or die into a strip form having an outer visible surface and an undersurface wherein, the step of layering comprises layering the second extruded polymer onto the outer visible surface of the second polymer material.

The step of selecting the second polymer material typically comprises selecting a predetermined first polymer material having a first durometer, hardness, bendability or molecular weight wherein the predetermined polymer material converts upon melting and cooling to a converted state having a second durometer, hardness, bendablity or molecular weight that is less than the first durometer, hardness, bendability or molecular weight; and wherein the step of selecting the first polymer material comprises selecting the predetermined polymer material in the converted state.

The step of selecting the second polymer material may comprise selecting a predetermined second polymer material and the step of selecting the first polymer material may comprise selecting a mixture of two or more polymer materials each being comprised of the predetermined second polymer material and each containing a dye.

In another aspect of the invention there is provided, a method of producing a structural body of two or more layers of polymeric material, the method comprising:
selecting a first polymer material that has been melted and cooled to solid form;
selecting a second polymer material that has not been melted;
extruding the first and second polymer materials simultaneously in molten form through a selected mold or die into first, second and third strips;
layering the simultaneously extruded first, second and third strips into contact with each other in their molten form upon exiting the selected mold or die;
wherein the first strip is comprised of the first polymer material and the second and third strips are comprised of the second polymer material; and;
wherein the first strip is sandwiched between the second strip and the third strip.

In such an embodiment, the step of selecting the second polymer material may comprise selecting a predetermined polymer material having a first durometer, hardness, bendability or molecular weight wherein the predetermined polymer material converts upon melting and cooling to a converted state having a second durometer, hardness, bendablity or molecular weight that is less than the first durometer, hardness, bendability or molecular weight; and wherein the step of selecting the first polymer material may comprise selecting the predetermined polymer material in the converted state.

The step of selecting the second polymer material may comprise selecting a predetermined second polymer material wherein the step of selecting the first polymer material may comprise selecting a mixture of two or more polymer materials each being comprised of the predetermined second polymer material and each containing a dye.

### BRIEF DESCRIPTION OF THE DRAWINGS

The above and further advantages of the invention may be better understood by referring to the following description in conjunction with the accompanying drawings in which.

Fig. 1 is an underside/perspective cross sectional view of a generic design of a composite material extruded bumper product showing a solid strip form extruded body of material comprising a top outer layer of relatively hard polymer material, an inner or intermediate layer of relatively soft or less hard and more bendable polymer material and an undersurface strip of relatively hard, shrink resistant polymer material;

Fig. 2 is a topside/perspective cross sectional view of the Fig. 1 product showing the product mounted or snap fit onto a railing;

Fig. 3 is a schematic cross sectional view of the Fig. 1 product;

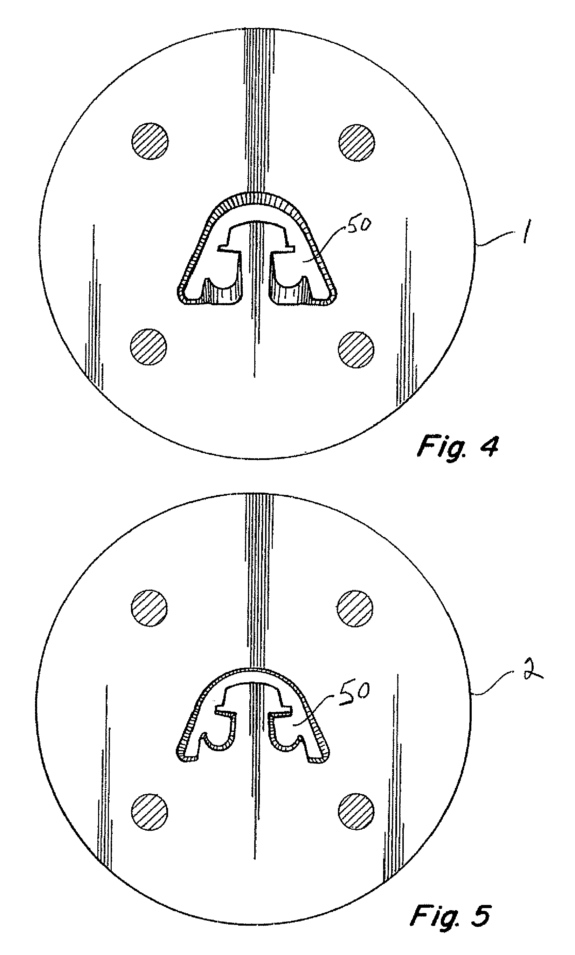

Fig. 4 is a rear elevational view of the first plate as seen along line 4-4 of Fig. 3;

Fig. 5 is a rear elevational view of the second plate as seen along line 5-5 of Fig 3;

Fig. 6 is a rear elevational view of the third plate as seen along line 6-6 of Fig. 3;

Fig. 7 is a rear elevational view of the fourth plate as seen along line 7-7 of Fig. 3;

Fig. 8 is a front elevational view of the fourth plate as seen along line 8-8 of Fig. 3,

Fig. 9 is a front cross-sectional view of the Fig. 1 product; and,

Fig. 10 is an exploded perspective view of the third and fourth plates shown in Fig. 3;

Fig 11 shows an underside/perspective cross sectional view of a composite material extruded bumper product according to the invention similar to the structure shown in Fig. 1, the Fig. 11 product showing the underside extruded layer of polymeric material having a pair of integrally formed finger extensions that are resiliently bendable at a neck portion to a stressed position shown in Fig. 12 where the fingers are compressibly engaged in the stressed position against the outer facing surface of a base mounting member;

Fig 12 shows a perspective view of the composite material bumper product of Fig. 11 bent along its longitudinal axis X with the bumper being compressibly engaged with a base mounting member such that the bumper is securely attached to the base member while being bent; and,

Fig. 15 shows the bumper product of Figs. 11 and 12 being bent such that its axis X has a curvature where the circumferential diameter of the curvature is D at all tangent points along the length of the axis of the strip, or in other words a completely circular curvature having a diameter D.

### DETAILED DESCRIPTION

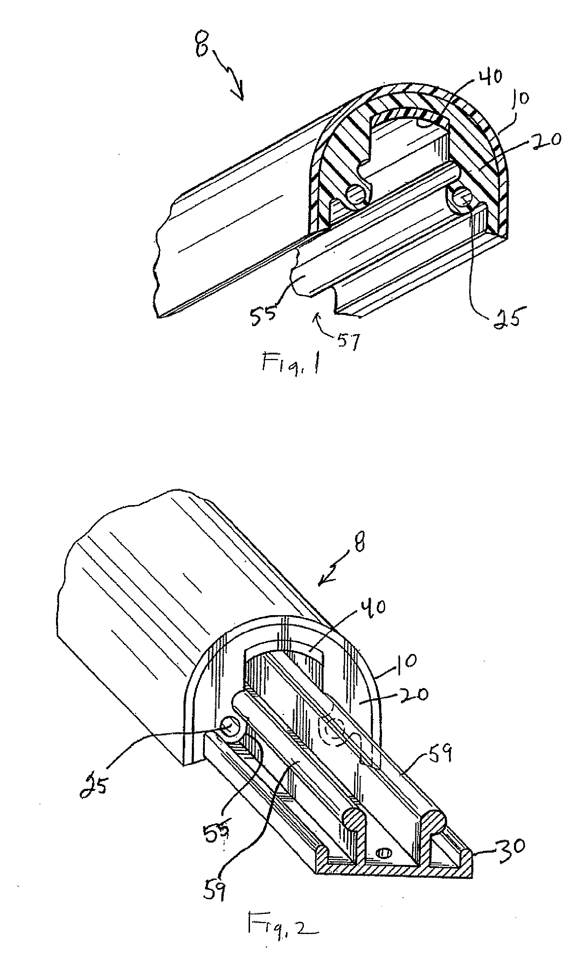

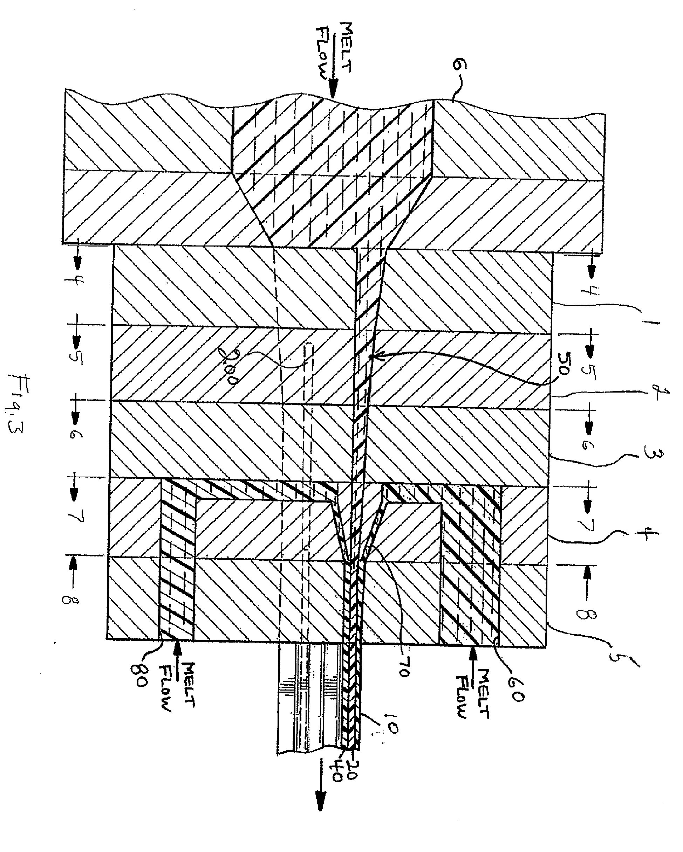

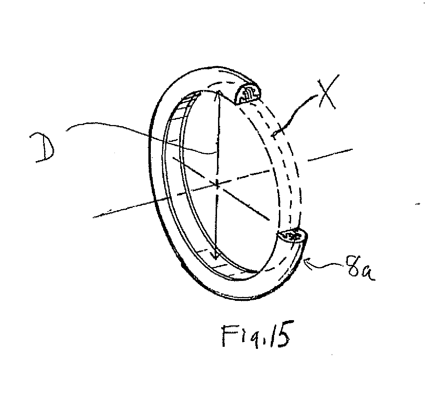

Figs. 1, 2, 9 and 11, 12 show an extruded length of a generic bumper product 8 and a bumper 8a according to the invention comprising an outer facing strip 10 of relatively hard polymer material, and intermediate strip 20, 20a of relatively soft, rubbery or bendable polymer material and an undersurface strip 40 of relatively hard, rigid, shrink resistant polymer material. The generically depicted and described product 8 of Figs. 1, 2 contrasts with product 8a described below which has outside terminal edges 12, 14 one or both of which compressibly engage a mounting surface 350, Fig. 14 when the strip bumper product 8a is attached to its mounting base 300.

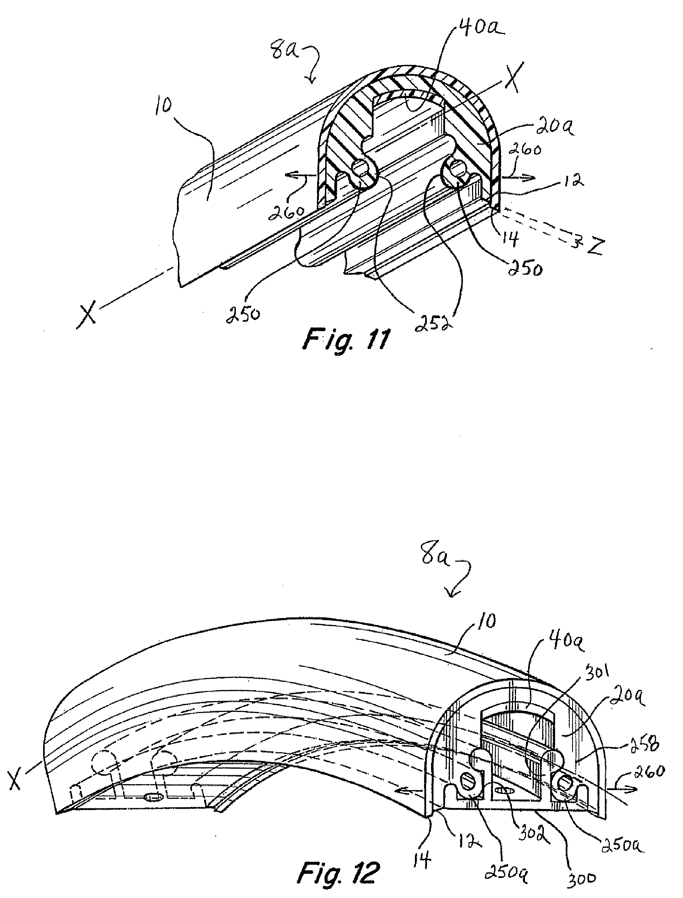

The embodiment of the extruded strip product 8a shown and described typically has resiliently deformable fingers 250, 250a that compressibly engage against a base mounting surface 302, Figs. 11-15. The outer coat or strip component/layer 10, Figs. 11-14 is bonded during the extrusion process, preferably immediately upon exit from the final extrusion dies 4, 5 to the outer surface of the inner soft or manually bendable layer or strip 20 such that the end product assumes the outward visual appearance of a relatively hard, shiny surface 10 as opposed to the inner layer 20 which cannot be visually seen when mounted on a rail 30 as shown in Fig. 2.

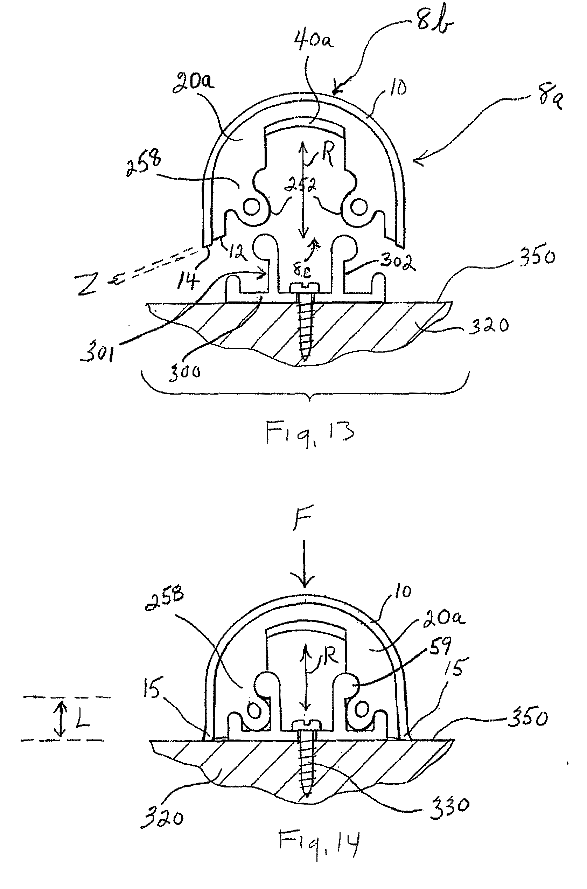

As best shown in Figs. 13, 14 the extruded bumper product 8a has a closed top end 8b and an open bottom end 8c via which the strip 8a as a whole is attached to a mounting base 300. The end of the open bottom end 8c terminates in opposing terminal edges 12 and 14 The base 300 is, in turn, connected to a surface 350 (e.g. an exposed surface of a wall, shelf, cabinet or the like 320 located in a heavily trafficked room) via a conventional attachment mechanism such as a screw 330. The strip 8a has a radial axis or direction R along which a force or pressure F is applied to cause the bumper to become attached and remain attached under pressure F to the mounting base 300 as described hereafter.

With reference to Figs. 11-15, in an improvement to the product described with reference to Figs 1, 2 the inner core layer 20a can be configured to use an attachment mechanism that enables attachment to the base 300 in such a way that one or the other or both of the terminal edges 12, 14 can compressibly engage against the surface 350 on which the strip 8a is intended to be mounted. In a most preferred embodiment as shown in Figs. 11-14, the opposing terminal edges 14 of the outer relatively hard (higher durometer) polymeric layer 10 preferentially extend a distance Z in the radial direction R beyond the terminal edges 12 of the inner layer 20a so that the edges 14 preferentially engage surface 350. As shown, when the strip 8a is attached to the base 300, the portion of the outer layer 10 that extends by distance Z past the terminus of inner edges 12 bends at area 15 upon engagement of edge 14 with surface 350 Area or portion 15 of strip 10 remains under stress due to the compression force F which is constantly exerted and maintained as long as the strip 8a is attached to the base 300. The force F is maintained and the stress in area 15 is created and maintained such that edge 14 is maintained in constant compressed contact with surface 350 by the action of attachment mechanism 252 in conjunction with surface 302 and by the consequent stress that is created in resiliently bendable neck portion 258 of layer body 20a when fingers 252 are attached to uprights 301 in any of the manners described herein. Regardless of the mechanism by which layer 20a is attached to base 300, the fact that the layer 20a is attached to base 300 and the selected cross-sectional configuration of the outer 10 and inner 20a layers relative to the configuration and radial lengths of the edges 14 and 12 and the base components 301, 59 and 302 enable the edges 14 and/or 12 to engage the surface 350 under compression F exerted in some manner by the attachment mechanisms that hold the strip 8a onto the base 300.

Such compressed contact between edge 14 and surface 350 serves to seat the bumper firmly and with stability on the base 300 and surface 350 such that the strip 8a is more resistant to movement on base 300 in a direction orthogonal to direction R when impacted. The compressed mating of edges 14 with surface 350 also serves to provide the outer layer 10 of strip 8a with a visually continuous contour with surface 350 and to prevent debris and dirt from traveling past edges 12, 14 into and/or through the open end 8c of the strip.

As can be readily imagined, the terminal edges 12 of the inner layer 20a can be configured to extend radially in the direction R further than and past edges 14 such that when the strip 8a is attached to base 300, the edges 12 will preferentially first make contact with surface 350 under compression force F. Alternatively both of the terminal edges 12 and 14 can be configured to terminate at the same point or radial distance so that both edges 12, 14 simultaneously engage surface 350 under compression F when the strip 8a is attached to base 300.

As shown in the embodiment of Figs. 11-15, layer 20a of the strip 8a is extruded into a configuration that provides a pair of integrally formed fingers 250a. The fingers 250a protrude from the strip via neck portions 258. The configuration and shape of the fingers 250a and necks 258 are selected relative to a pair of strategically located rigid uprights 301 on base member 300 so that the bumper 8a will attach via radially inward force to the base 300 when the base member 300 is bent as shown in Fig. 12. When the member 8a is bent along its axis X as shown in Fig. 12, the fingers 250 will have a tendency to travel in the outward direction 260.

As shown in Figs. 11, 12, a pair of rigid uprights 301 are provided on base 300. The uprights 301 are provided with a pair of complementary radially outwardly facing surfaces 302 for engaging with a pair of radially inwardly facing surfaces 252 of the pair of fingers 250a. The inside finger surfaces 252 are designed to compressibly engage against the complementary pair of radially outwardly facing surfaces 302 of the uprights 301 of mounting rail 300 thus attaching the bumper 8a to base rail member 300 even when the bumper 8a is bent as shown in Figs 12-15. The protruding fingers 250a and neck portions 258 are dimensionally configured as integral extensions of strip 20a so that the neck portions 258 remain under stress and continue to force the surfaces 252 in a direction opposite to direction 260 against surfaces 302 even when the strip 8a is bent along its axis X (as shown in Figs 12-15). When the strip 8a is bent around axis X, the fingers 250a snap downwardly around the detents 59 disposed at the top of uprights 301 and the surfaces 252 continue to be urged into engagement with surfaces 302 of uprights 301 even when bumper 8a is bent as shown in Figs. 12-15.

The undersurface strip or layer 40a, Figs. 11-12, is comprised of a polymer material that has a selected durometer or degree of softness that enables the entire strip 8a to readily bend under manually exerted force along its axis X as shown in Figs. 12-15. The durometer of the material of which strip 40a is comprised is preselected to cooperate with and control the bending of the strip 8a along its axis X together with the stress in necks 258 such that the attachment fingers or projections 250 do not travel too far in the radially outward direction 260 when the strip 8a is bent as shown in Fig. 12 that the fingers 250 will not engage the complementary surfaces 302 under attachment pressure. The hardness or durometer of the materials of strip 40a is preferably selected to be between about 92 and about 98 Shore A, most preferably about 95 Shore A. The durometer of the materials of which each of strips 20a, 40a and 10 are comprised are selected to enable the axis of the strip to be bent to a curvature measured at any particular tangent point having a diameter between infinity, i.e. where the axis X is linear, and where the axis X has a curvature such that the diameter of the curvature at any particular tangent point to the curvature is at least about two feet That is, the stiffness of the material of which strip 40a is comprised is selected to be of a degree sufficient to prevent fingers 250a from traveling radially outwardly 260 to such a degree that neck portion 258 of the fingers 250a will not continue to remain under sufficient stress to cause finger surfaces 252 to engage surfaces 302. Most preferably, the durometer of all of the materials of which strips 20a, 40a and 10 are comprised are selected together to prevent, upon bending of axis X, the fingers 250 from traveling so far in the direction 260 that the fingers 250 will not continue to urge surfaces 252 into effective compressed engagement with surfaces 302 of base or mounting member 300.

Fig. 2 shows the generic elongated strip-like product 8 of Fig. 1 mounted on a rigid, inflexible metal rail or base member 30 by snap fitting of preformed tongues or detents 55 formed on the underside 57, Fig. 1, of the core 20 strip/layer onto a complementary receiving set of grooves or detents 59 formed on the outside surface the rail 30 shown in Fig. 2. This detent attachment mechanism, although enabling compressed mating of edges 12 and/or 14 with surface 350 does not necessarily allow for reliable attachment of the bumper 8 to the base member 30 if or when the bumper 8 is substantially bent along its axis as shown in Figs. 12, 15.

In one embodiment of the invention, the undercore strip/layer 20a has, instead, resiliently bendable fingers 250 that are integrally formed and project from the core layer 20a. As shown in Fig. 11, the fingers 250 are in an unstressed and unbent position. As shown in Fig. 12, the originally unbent or unstressed fingers 250 are manually forced into a stressed or bent position 250a such that a neck portion 258 is bent and placed under stress such that an inwardly facing surface 252, Fig. 11, of the fingers 250a is compressibly engaged against a complementary rigid surface 302 of a stationary base mounting member 300. The base mounting member 30 is itself mounted or attached to the surface of a wall, table, counter, display case or the like in a heavily trafficked area in an interior retail store environment. The base or mounting member 300 is itself also bendable or flexible along its axis such that the base mounting member 300 can be fixed or attached to curved or curvilinear surfaces and, once attached, act as a base for ready mounting of a bumper 8a onto the base 300 in the manner just described. The fingers 250 are readily manually bendable and can travel resiliently between the unstressed position 250 shown in Fig. 11 and the stressed/bent position 250a shown in Fig. 12.

In the embodiment of Figs. 1, 2, 9 where the detents 55 and 59 cooperate to hold the strip on the base member by a hook-like action and where the undersurface strip 40 is comprised of a completely hard material, the strip 8 cannot be bent to any substantial degree along its axis such that the detents 55 are able to snap fittably attach over detents 59 to the base 30.

In another aspect of the present invention, the strip 8a can be substantially bent or curved along its axis X as shown in Figs. 11-15 and still retain its ability to engage and attach to the base member 300. When the strip 8a is bent along its axis as shown in Figs. 12, 15 the fingers 250 will have a tendency to travel or deform outwardly in the direction shown as 260, Fig. 11. In order for the surface 252 to compressibly engage the complementary mating surface 302 of the base 300, the fingers 250 must be under enough bent stress to maintain surfaces 252 in the opposite direction of 260 in compressed contact with surfaces 302. The fingers 250 are configured in advance such that the finger surfaces 252 will continue to engage surfaces 302 even when the strip 8a is bent from its linear orientation shown in Fig. 11 to an orientation where the curvature at any tangent point along the length of the axis X of the strip would have a circumferential diameter, e.g. diameter D, Fig. 15, of greater than about two feet. As shown in Fig 15, the strip 8a has been bent in an essential circle having a diameter D. In this Fig. 15 view, the fingers 250 of the strip 8a would still be oriented such that the finger surfaces 252 are able to compressibly engage surfaces 302 as long as the diameter D is greater than about two feet.

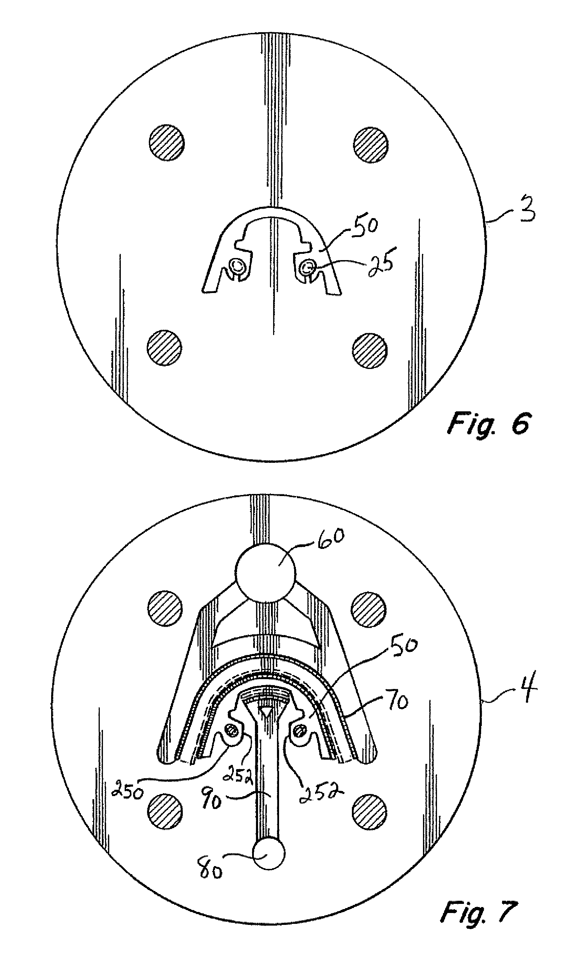

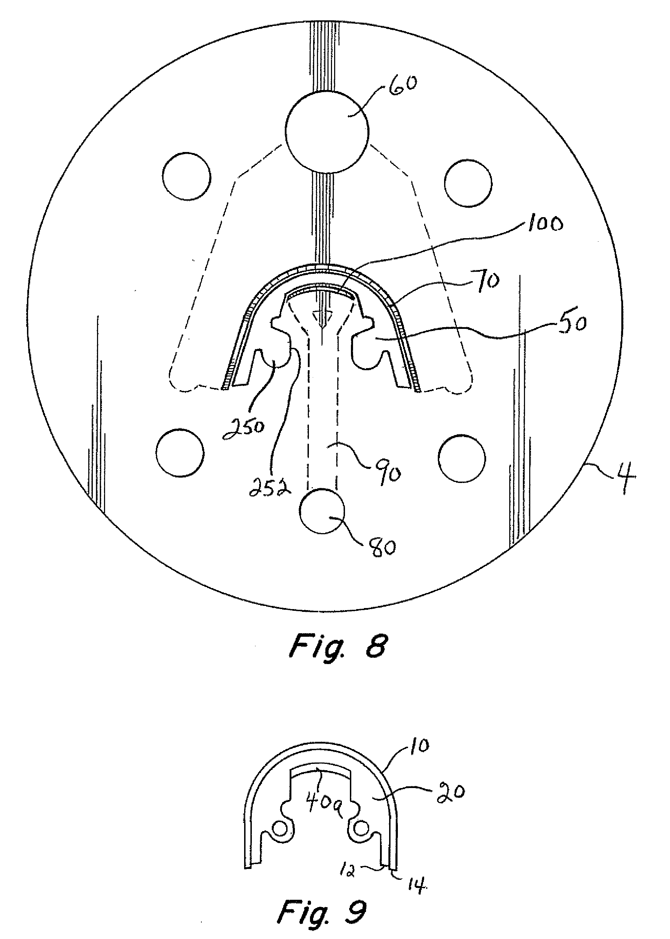

As shown in Fig. 3, the composite material feed for the core 20 or 20a is fed directly from the exit barrel 6 of an extruder through a central composite material bore 50 that extends through each of plates 1-4 The polymer feed for the cap coat 10 is fed through an aperture 60 extending from the exit side to the entrance side of plate 4 through plate 4, the feed then being routed through a bore 70, Figs. 7, 8, 10 on the entrance side of plate 4 such that the cap coat material feed is ultimately routed through plate 4 and out the exit side of bore 70 on the exit side of plate 4, Figs. 7, 8, 10 simultaneously with the extrusion of the feed material for the core 20 or 20a being routed through central bore 50. The polymer feed for the rigid non-shrink strip 40 or 40a is initially fed through an aperture 80 extending from the exit side to the entrance side of plate 4 through plate 4, the feed then being routed through a groove 90, Figs. 7, 8, on the entrance side of plate 4 such that the rigid strip 40 or 40a material is ultimately routed through plate 4 and out the exit side of bore 100 on the exit side of plate 4 simultaneously with the extrusion of the feed material for the core 20 or 20a being routed through central bore 50 and the feed material for the cap coat 10 being routed through bore 70. Thus all three separate streams of polymer materials comprising the cap coat 10, core 20 or 20a and rigid undersurface strip 40 or 40a are simultaneously co-extruded and come into contact with each other in a molten state immediately upon exit from the exit side of plate 4. Once the three co-extruded streams of materials come into contact with each other in the molten state, the materials firmly bond to each other during and upon cooling to form the product shown in Figs. 1, 2, 9 and/or 11-15.

Fig. 3 shows an additional end plate 5 that may be used together with the plates 1-4 assembly, the exact configuration and use of plates and equipment to effect the fluid material feed connections to the bores of plates 1-4 being a matter of design choice for the skilled artisan. The disclosed embodiment showing the use of four separate plates 1-4 is shown for purposes of example only. Any number or configuration of extrusion plates that achieve the function of routing of the thermoplastic polymer materials as shown may be used in the process. Positioning the exit ends of feed bores 50, 70, 80 in close adjacency to each other such that the separate streams of exiting polymer materials contact the surfaces of each other upon exit from the extrusion plates is most preferred so that the separate streams of exiting polymer materials come into contact with each other in a molten state immediately upon exit and thereby adhere to each other upon cooling from the molten state to a stable cooled state. When the separate streams of polymer materials come into contact with each other in the molten state the mating surfaces mix together somewhat at the point of contact and upon cooling to a crystalline state become essentially adhered to each other to form a the unitary product 8 shown in Figs. 1, 2, 9 or product 8a shown in Figs. 11-15. The separate streams of extruded polymer materials may alternatively be bonded to each other with a bonding material.

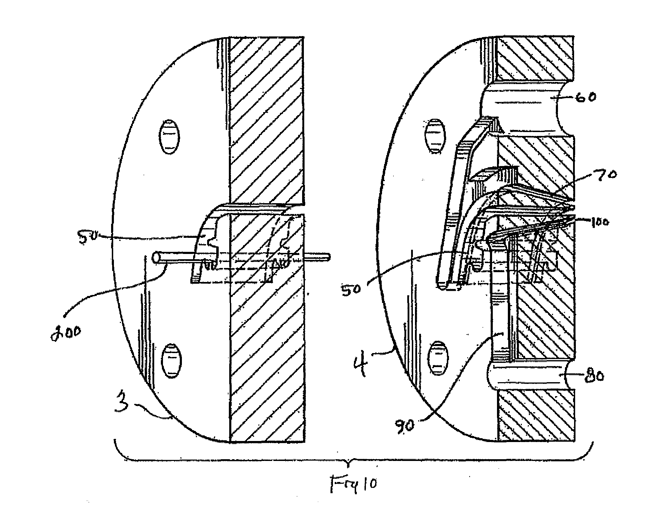

Figs. 3, 10 show a solid rod or wire 200 that may be positioned through the end portion of bore 50 in the middle of the detent 55 configuration of the core 20, 20a strip to enable an elongated aperture 25 to be formed within the body of the detent during the extrusion process to impart additional bendability or flexibility to the detent 55 or fingers 250.

The core material 20 or 20a typically comprises a mixture of polymer materials that have been previously processed and melted in a prior extrusion or injection molding cycle, e.g. a mixture of scrap materials from previous extrusion cycle runs of one or more selected thermoplastic polymer materials such as polyvinyl chloride (PVC) where each scrap material contains a different concentration/amount of dye material and/or a different durometer or hardness. The subsequent extrusion processing cycle carried out on previously extruded or molded materials causes the composite material now being melted a second time in the course of an extrusion or molding process to assume a lower durometer than the originally extruded product comprising virgin material and/or a greater rubberiness, flexibility or bendability than the original virgin material. The lower durometer of scrap material may also be a result of the scrap materials containing several different dye and other additives such as plasticizers and the like.

As used herein the phrase "melted for the first time" or "first melted" or the like means that the polymer material has not been previously melted during an extrusion or molding process, it being understood that the starting polymer material may have been previously in a molten form as a result of its having been produced/manufactured in the first instance.

The cap coat 10 thermoplastic material selected is preferably virgin polymer material that has not been previously extruded or otherwise melted and typically does not initially contain a dye. The cap coat 10 material upon extrusion has a higher durometer, rigidity and less rubberiness, flexibility and bendability than the core material 20. One or more dye materials that comprise between about 3% and about 10%, e.g. 4-7%, by weight of the cap coat polymer material may be mixed with/added to the thermoplastic starting feed material for the cap coat 10.

The material of which 40a is comprised, Figs. 11-12, is preferably a polymer material that also has been previously extruded or otherwise melted. The strip material 40a can be the most rigid of the three polymer materials and can be the most resistant to shrinkage particularly in/along the longitudinal direction of the elongated strip-form product 8. Whatever the rigidity of the material of which strip 40a is comprised, it possesses some degree of softness to allow the strip 8a to bend along its axis and still allow the finger surfaces 252 to reliably engage the complementary mounting surfaces 302. The material of which 40a is comprised may be the same or substantially the same polymer material as the core 20 or 20a material. The strip 40a provides a resistance to shrinkage of the core material 20 or 20a along the longitudinal or axial length of the elongated extruded strip-like product 8 by virtue of being bonded to the underside of the core 20 or 20a strip. Such resistance to shrinkage by virtue of the bonding of the non-shrink strip 40 or 40a to the core strip component 20 or 20a respectively thus obviates the necessity for replacing edge, end or corner pieces that are typically attached to or mounted at the ends of a finished strip product once installed on a rail or base member in an actual shelf, counter or other retail store environment.

The polymer material selected for use in comprising the cap coat 10 and the core 20 or 20a typically comprises the similar basic polymers, mixture of polymers or thermoplastic materials, e.g. thermoplastic polyvinyl chlorides, nylons, polyesters, polyethers, polyamides, rubbers and latex rubber materials and copolymers of one or more of all of the foregoing. That is the polymer materials of which the cap coat 10 and the core 20 or 20a are comprised typically have essentially the same units making up the polymer backbone. The polymer material of the cap coat 10 and core 20 or 20a materials typically differ somewhat in polymer chain length, degree of cross polymerization (if any) or in concentration and composition of dye materials contained within the matrix of the materials. For example, the virgin cap coat 10 material typically comprises a polymer material having a durometer of between about 75 and 90, e.g. 80-85, and the core layer 20 or 20a material comprises a mixture of two or more scrap materials that were originally extruded from the same basic material as the cap coat 10 material containing the same or different dye materials at the same or different concentrations as the cap coat 10 material contains.

Polymer materials suitable for use in the invention are thermoplastic polymers that are relatively pliable or manually bendable such as polyvinyl chloride, polyamide, polyether, polyester and copolymers of all of the foregoing with one or more of each other or with urethane or other polymer units that impart a suitable manual bendability to the end polymer Stiffeners, plasiticizers, catalysts and the like may be contained within the polymer materials to impart any desired degree of flexural modulus, hardness, impact resistance and like mechanical/physical properties to the polymer material.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An elongated strip (8a) of polymer material having a closed top end (8b) and an open bottom end (8c) along a cross-section of the strip (8a), the direction between the top and bottom ends defining a radial direction or axis (R) of the strip, the strip comprising:
a first inner core layer (20a) comprised of a first polymer material having a configuration along the cross-section of the strip selected to render the strip manually resiliently bendable, the inner core layer (20a) having opposing terminal edges (12) at the open end (8c) of the strip;
a second outer layer (10) comprised of a second polymer material bonded to an outer surface of the first inner core layer (20a), the second outer layer having opposing terminal edges (14) at the open end (8c) overlying the first inner core layer (20a);
wherein the inner core layer (20a) has an attachment mechanism (252) readily attachable through the open end (8c) of the strip to a complementary attachment mechanism (302) of a mounting device (300) that is attached to a mounting surface (350), the attachment mechanisms cooperating to exert a force or pressure (F) along the radial direction (R) of the strip when the strip is attached to the mounting device (300) that maintains the terminal edges (12, 14) of at least one of the inner and outer layers (10, 20a) in compressed (F) engagement with the mounting surface (350),

2. The elongated strip of claim 1 wherein the terminal edges (14) of the second outer layer (10) of the strip (8a) extend in the radial direction (R) of the strip a selected distance (Z) beyond the terminal edges (12) of the first inner core layer (20a) such that the terminal edges (14) of the second outer layer (10) preferentially engage the mounting surface (350) under the radial force or pressure (F) exerted by the attachment mechanism (252) and resiliently bend (15) under said pressure.

3. The elongated strip of claim 1 wherein the first and second layers are co-extruded simultaneously through a die (1-5) and bonded during their simultaneous co-extrusion, the second polymer material (10) having a durometer greater than the durometer of the first polymer material (20a), the durometer of the second polymer material being selected to enable the terminal edges (14) of the second outer layer to resiliently bend on engagement with the mounting surface (350) when the strip and the terminal edges (14) of the outer layer (10) are mounted under pressure (F) on the mounting surface (350).

4. The elongated strip of claim 3 wherein the first polymer material (20a) comprises a meltable polymer material that has been melted at least once prior to the co-extrusion.

5. The elongated strip of claim 3 wherein the second polymer material (10) comprises a meltable polymer material that is first melted during the co-extrusion.

6. The elongated strip of claim 1 wherein the first polymer material (20a) contains at least two selected dyes.

7. The elongated strip of claim 2 wherein the second polymer material (10) contains at least one selected dye.

8. The elongated strip of claim 2 wherein the first polymer material (20a) contains at least two selected dyes.

9. The elongated strip of claim 2 wherein the second polymer material (10) comprises a meltable polymer material that is first melted during the co-extrusion and wherein the first polymer material (20a) comprises a meltable polymer material that has been melted at least once prior to the co-extrusion.

10. The elongated strip of claim 1 further comprising a third layer of a polymeric material (40, 40a) bonded to an inner surface of the first layer (20a)

11. The elongated strip of claim 10 wherein the first, second and third layers (10a, 10, 40a) are co-extruded simultaneously through a die (1-5) and bonded during their simultaneous ca-extrusian.

12. The elongated strip of claim 13 wherein the third layer (40, 40a) comprises a polymeric material that is first melted during the co-extrusion.

13. A method of mounting an elongated strip (8a) of resiliently bendable polymer material on a mounting surface (350) comprising;
forming a strip of polymer material comprising a first inner core layer (20a) and a second outer layer (10) out of first and second manually bendable polymer materials respectively by co-extruding said materials simultaneously through a die (1-5) and bonding said strips to each other at the exit of the dies;
during the extrusion process, forming the inner core layer (20a) into a configuration having a closed top end (8b) and an open bottom end (8c), the direction between the top and bottom ends defining a radial direction or axis (R) of the strip (8a);
wherein the first inner core layer and the second outer layer have terminal edges (12, 14) at the open bottom end (8c);
forming the inner core layer (20a) during the extrusion process with an attachment mechanism (252) that is readily attachable through the open end (8c) of the strip to a complementary attachment mechanism (302) of a mounting device (300) that is attached to a mounting surface (350),
wherein the attachment mechanism (252) of the inner core layer is formed so as to exert a force or pressure (F) in the radial direction (R) of the strip when attached to the mounting device (300) that maintains the terminal edges (12, 14) of at least one of the inner and outer layers (10, 20a) in compressed (F) engagement with the mounting surface (350).
14. The method of claim 13 wherein the terminal edges (14) of the second outer layer (10) of the strip are formed during the extrusion to extend in the radial direction (R) of the strip a selected distance (Z) beyond the terminal edges (12) of the first inner core layer such that the terminal edges (14) of the second outer layer preferentially engage the mounting surface (350) under the radial force or pressure (F) exerted by the attachment mechanism (252, 302) and resiliently bend (15) under said pressure.

## Amended claims

### Amended claims in accordance with Rule 86(2) EPC.

**1.** An elongated strip (8a) of polymer material having a closed top end (8b) and an open bottom end (8c) along a cross-section of the strip (8a), the direction between the top and bottom ends defining a radial direction or axis (R) of the strip, the strip comprising:
a-first inner core layer (20a) comprised of a first polymer material having a configuration along the cross-section of the strip selected to render the strip manually resiliently bendable, the inner core layer (20a) having opposing terminal edges (12) at the open end (8c) of the strip;
a second outer layer (10) comprised of a second polymer material bonded to an outer surface of the first inner core layer (20a), the second outer layer having opposing terminal edges (14) at the open end (8c) overlying the first inner core layer (20a);
**characterized in that** the inner core layer (20a) has an attachment mechanism (252) readily attachable through the open end (8c) of the strip to a complementary attachment mechanism (302) of a mounting device (300) that is attached to a mounting surface (350), by means of the attachment mechanism cooperating to exert a force or
pressure (F) along the radial direction (R) of the strip when the strip is attached to the mounting device (300) that maintains the terminal edges (12, 14) of at least one of the inner and outer layers (10, 20a) in compressed (F) engagement with the mounting surface (350), and
wherein the terminal edges (14) of the second outer layer (10) of the strip (8a) extend in the radial direction (R) of the strip a selected distance (Z) beyond the terminal edges (12) of the first inner core layer (20a) such that the terminal edges (14) of the second outer layer (10) preferentially engage the mounting surface (350) under the radial force or pressure (F) exerted by the attachment mechanism (252) and resiliently bend (15) under said pressure.

**2.** The elongated strip of claim 1 wherein the first and second layers are co-extruded simultaneously through a die (1-5) and bonded during their simultaneous co-extrusion, the second polymer material (10) having a durometer greater than the durometer of the first polymer material (20a), the durometer of the second polymer material being selected to enable the terminal edges (14) of the second outer layer to resiliently bend on engagement with the mounting surface (350) when the strip and the terminal edges (14) of the outer layer (10) are mounted under pressure (F) on the mounting surface (350).

**3.** The elongated strip of claim 2 wherein the first polymer material (20a) comprises a meltable polymer material that has been melted-at least once prior to the co-extrusion.

**4.** The elongated strip of claim 2 wherein the second polymer material (10) comprises a meltable polymer material that is first melted during the co-extrusion.

**5.** The elongated strip of claim 1 wherein the first polymer material (20a) contains at least two selected dyes.

**6.** The elongated strip of claim 1 wherein the second polymer material (10) contains at least one selected dye.

**7.** The elongated strip of claim 1 wherein the first polymer material (20a) contains at least two selected dyes.

**8.** The elongated strip of claim 1 wherein the second polymer material (10) comprises a meltable polymer material that is first melted during the co-extrusion and wherein the first polymer material (20a) comprises a meltable polymer material that has been melted at least once prior to the co-extrusion.

**9.** The elongated strip of claim 1 further comprising a third layer of a polymeric material (40, 40a) bonded to an inner surface of the first layer (20a).

**10.** The elongated strip of claim 9 wherein the first, second and third layers (10a, 10, 40a) are co-extruded simultaneously through a die (1-5) and bonded during their simultaneous co-extrusion.

**11.** The elongated strip of claim 9 wherein the third layer (40, 40a) comprises a polymeric material that is first melted during the co-extrusion.

**12.** A method of mounting an elongated strip (8a) of resiliently bendable polymer material on a mounting surface (350) comprising:
forming a strip of polymer material comprising a first inner core layer (20a) and a second outer layer (10) out of first and second manually bendable polymer materials respectively by co-extruding said materials simultaneously through a die (1-5) and bonding said strips to each other at the exit of the dies;
during the extrusion process, forming the inner core layer (20a) into a configuration having a closed top end (8b) and an open bottom end (8c), the direction between the top and bottom ends defining a radial direction or axis (R) of the strip (8a);
wherein the first inner core layer and the second outer layer have terminal edges (12, 14) at the open bottom end (8c);
forming the inner core layer (20a) during the extrusion process with an attachment mechanism (252) that is readily attachable through the open end (8c) of the strip to a complementary attachment mechanism (302) of a mounting device (300) that is attached to a mounting surface (350),
**characterized in that** the attachment mechanism (252) of the inner core layer is formed so
as to exert a force or pressure (F) in the radial direction (R) of the strip when attached to the mounting device (300) that maintains the terminal edges (12, 14) of at least one of the inner and outer layers (10, 20a) in compressed (F) engagement with the mounting surface (350) ; and
wherein the terminal edges (14) of the second outer layer (10) of the strip are formed during the extrusion to extend in the radial direction (R) of the strip a selected distance (Z) beyond the terminal edges (12) of the first inner core layer such that the terminal edges (14) of the second outer layer preferentially engage the mounting surface (350) under the radial force or pressure (F) exerted by the attachment mechanism (252, 302) and resiliently bend (15) under said pressure.
